# FASCICULE DE BREVET EUROPEEN

(11) **EP 1 212 169 B1**
(45) Date de publication et mention de la délivrance du brevet: **22.10.2003**
(21) Numéro de dépôt: 00960802.7
(22) Date de dépôt: 06.09.2000
(51) Int. Cl.: B23Q 5/28, B23Q 39/02, B23Q 1/62

(54) **MACHINE-OUTIL D'USINAGE DE TYPE BIBROCHE**
DOPPELSPINDLIGE WERKZEUGMASCHINE
TWIN-SPINDLE MACHINING TOOL

(30) Priorité: 07.09.1999 FR 9911227
(43) Date de publication de la demande: 12.06.2002
(73) Titulaire: Renault Automation Comau, 92365 Meudon La Forêt Cedex (FR)
(72) Inventeur: FIORONI, Claude, F-81100 Castres (FR)
(74) Mandataire: Richebourg, Michel François
(86) Numéro de dépôt international: FR0002449
(87) Numéro de publication internationale: WO01017723

(56) Documents cités:
- EP-A- 1 004 397
- WO-A-97/27026
- DE-A- 4 020 997
- US-A- 5 203 061
- US-A- 5 265 986
- US-A- 5 368 425
- US-A- 5 944 643

## Description

### DOMAINE D'APPLICATION DE L'INVENTION

La présente invention a trait au domaine des machines-outils du type de celles comprenant deux broches indépendantes porte-outil et notamment aux adaptations permettant de réaliser au moyen de telles machines-outils, un usinage dans les meilleures conditions de rapidité et de précision.

### DESCRIPTION DE L'ART ANTÉRIEUR

Pour améliorer la productivité des machines-outils telles les centres d'usinage à très grande vitesse, les concepteurs de machines-outils ont développé ces dernières années, des machines-outils dites bibroches mettant en oeuvre deux broches porte-outil indépendantes au lieu d'une seule comme celle décrite dans le document allemand n° DE 40 20 997. Il existe également dans l'art antérieur des machines adoptant une pluralité de broches telle celle décrite dans le document américain n° US 5,265,986.

Il a été constaté que sur les machines-outils d'usinage à très grande vitesse monobroches telle celle décrite dans le document américain n° US 5,368,425 ou celle décrite dans le document international n° WO 97/27026, le temps de coupe effectif ne représentait que la moitié du temps d'utilisation de la machine-outil, le reste étant utilisé pour le changement d'outils. En effet, en améliorant les temps de course ainsi que la rapidité des usinages, et en dotant la machine-outil d'une grande quantité d'outils afin de lui permettre d'offrir un large champ de possibilités d'usinage, les concepteurs ont constaté que le temps de changement d'outils constituait la difficulté majeure à franchir, pour l'optimisation de la productivité d'une machine-outil. Une première solution à ce problème ayant été de diminuer le temps d'usinage, une autre a été de développer un concept de machine-outil adoptant non un seul coulant porte électrobroche mobile selon trois axes mais deux coulants porte électrobroche mobiles sur trois axes. Ce concept a pour grand avantage d'autoriser l'usinage d'une pièce avec une première broche porte-outil pendant que la deuxième change d'outil, et vice-versa. Ainsi, lorsqu'une phase d'usinage assurée par un outil tournant présent à l'extrémité d'un premier coulant porte- électrobroche est terminée sur la pièce, une deuxième phase peut commencer sans temps d'arrêt au moyen d'un outil tournant présent à l'extrémité du deuxième coulant porte électrobroche, le premier coulant s'écartant de la pièce et se dirigeant vers son dispositif de changement d'outils.

Il a été constaté que le gain de productivité obtenu compense largement le surcoût de l'achat d'une machine-outil de type bibroche en comparaison avec une machine-outil de type monobroche.

Néanmoins, les machines-outils classiques adoptant le concept bibroche voient leur productivité -et leur efficacité amoindries par l'utilisation d'une motorisation de type vis à billes dont les performances ne répondent pas toujours aux critères de rapidité d'exécution et de fiabilité de l'usinage à très grande vitesse.

### DESCRIPTION DE L'INVENTION

Pour optimiser la productivité de ces machines-outils mettant en oeuvre deux coulants porte-outil notamment dans l'entraînement en mouvements desdits coulants, la demanderesse a mené des recherches ayant abouti à une machine-outil de type bibroche assurant les usinages plus rapidement en mettant en oeuvre une motorisation et une architecture cinématique adaptée à ladite motorisation, particulièrement nouvelles et inventives.

L'invention se base sur une machine-outil d'usinage à grande vitesse du type de celle
- assurant la mise en mouvement indépendante sur au moins trois axes de deux coulants porte-outil,
- comportant une pluralité de moyens de guidage correspondant aux mouvements rectilignes des deux coulants selon trois axes,
- où les moyens de guidage sont constitués par des paires de rails de guidage.
Selon la caractéristique principale de l'invention, cette machine outil est remarquable en ce que lesdits mouvements indépendants de chaque coulant étant mis en oeuvre par des moteurs linéaires, du type de ceux comportant chacun un bloc primaire mobile et un bloc secondaire fixe,
les blocs primaires mobiles indépendants desdits moteurs linéaires assurant le mouvement rectiligne indépendant de chacun des deux coulants selon au moins un des trois axes, partageant deux-à-deux un seul et même bloc secondaire fixe,
l'axe de mouvement sur lequel est partagé un bloc secondaire pour deux blocs primaires étant constitué par un axe de mouvement transversal horizontal,
elle comprend une première paire de rails agencée sur un plan vertical matérialisé par un bâti fixe vertical sur lequel sont guidées en translation selon un premier axe transversal horizontal, deux demi tables verticales sur chacun desquelles est agencée une deuxième paire de rails sur laquelle est guidée en translation selon un deuxième axe transversal, une poupée dans laquelle est agencée une troisième paire de rails sur laquelle est guidé en translation selon un troisième axe longitudinal perpendiculaire aux deux premiers, un coulant à l'extrémité duquel est entraîné en rotation un outil, le bâti fixe vertical étant aménagé d'une fenêtre entre les deux rails de la première paire, fenêtre occupée partiellement par la partie arrière des deux poupées.

Cette caractéristique est particulièrement avantageuse en ce qu'elle fait bénéficier à une architecture cinématique adoptant le concept bibroche, d'une motorisation assurant une grande vitesse dans les mouvements des différents modules de cette architecture et suivant les trois axes. Ainsi, non seulement les changements d'outils peuvent être réalisés en temps caché, c'est à dire qu'une broche peut changer d'outil pendant que l'autre réalise un usinage mais aussi, les temps de course de ces coulants seront diminués au moyen des moteurs linéaires. En effet, mieux adaptés pour l'usinage à grande vitesse, les moteurs linéaires notamment lorsqu'ils fonctionnent par paires, ont pour avantage d'offrir de grandes accélérations et une précision optimale dans leur déplacement.

En outre, l'association d'une nouvelle motorisation à une architecture cinématique adoptant le concept bibroche a amené la demanderesse à imaginer une architecture cinématique adaptée à une telle association.

Ainsi, la demanderesse exploite avantageusement les composants d'une motorisation linéaire de façon à diminuer le nombre de pièces en utilisation sur un même axe de mouvement, un seul bloc secondaire pour deux blocs primaires qui sont chacun liés, à une partie mobile différente.

De même, selon une autre caractéristique particulièrement avantageuse, lesdits moteurs linéaires dont les blocs primaires partagent deux à deux un seul et même bloc secondaire, partagent deux à deux, une seule et même règle de mesure sur laquelle se déplace autant de curseur que de blocs primaires. Sur un même axe de mouvement, la demanderesse utilise donc, pour deux parties mobiles, une seule règle de mesure pour deux blocs primaires de moteurs linéaires et en conséquence pour deux curseurs.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, un mode de réalisation d'une machine-outil conforme à l'invention.

### BRÈVE DESCRIPTION DES DESSINS

La figure 1 est une vue en perspective de la partie avant d'une machine-outil conforme à l'invention,
la figure 2 est une vue de face de la partie avant de la machine-outil de la figure 1,
la figure 3 est une vue du côté gauche de la partie avant de la machine-outil de la figure 1,
la figure 4 est une vue de dessus en coupe, la ligne de coupe étant représentée par le trait interrompu mixte portant les références AA sur la figure 2.

### DESCRIPTION DES MODES DE RÉALISATION PRÉFÉRÉS

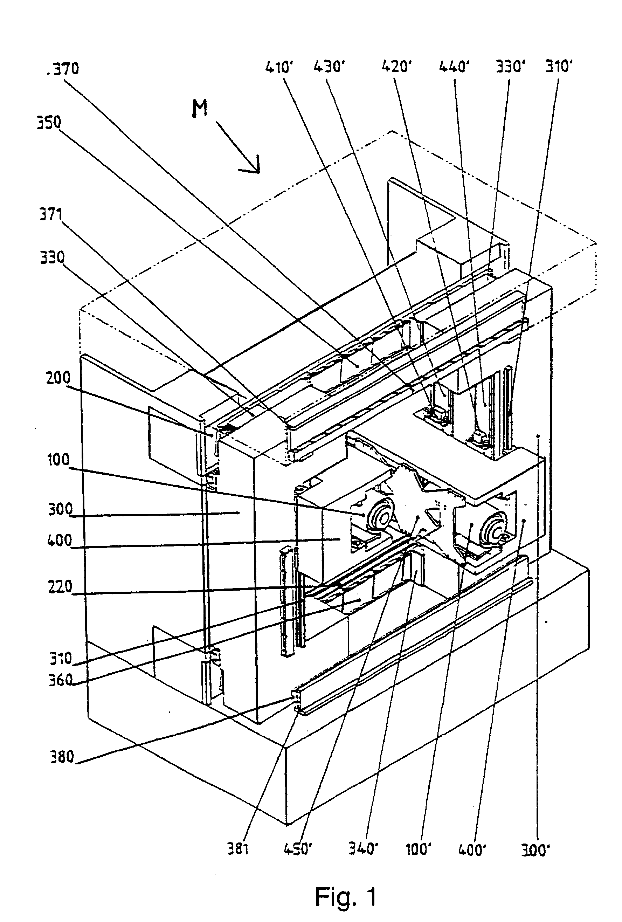

Tel qu'illustrée sur le dessin de la figure 1, la machine-outil d'usinage à grande vitesse référencée M dans son ensemble est du type de celle assurant la mise en mouvement sur trois axes, un premier axe transversal horizontal X, un deuxième axe transversal perpendiculaire au premier Y et un troisième axe transversal perpendiculaire aux deux premiers Z, de deux coulants porte-outil 100 et 100' au moyen d'entraînements linéaires associés à des moyens de guidage constitués par des paires de rails.

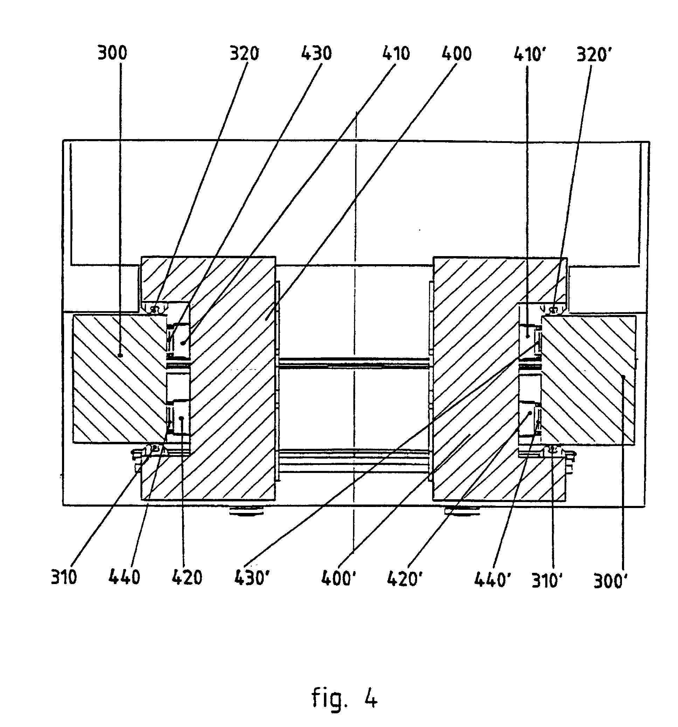

Cette machine-outil M adopte une structure symétrique et comprend, agencée sur un plan vertical matérialisé par un bâti fixe vertical 200, une première paire de rails 210 et 220 sur laquelle sont guidées en translation selon l'axe X, deux demi tables verticales 300 et 300'. Une deuxième paire de rails 310, 320 et 310', 320' (cf figure 4) est agencée sur chaque portique 300 et 300' et guide en translation selon l'axe Y, une poupée 400 et 400'. Une troisième paire de rails 110, 130 et 110', 130' est agencée dans chaque poupée 400 et 400' et guide en translation selon l'axe Z perpendiculaire aux deux premiers axes, un coulant 100 et 100' à l'extrémité duquel est entraîné en rotation un outil (non illustré).

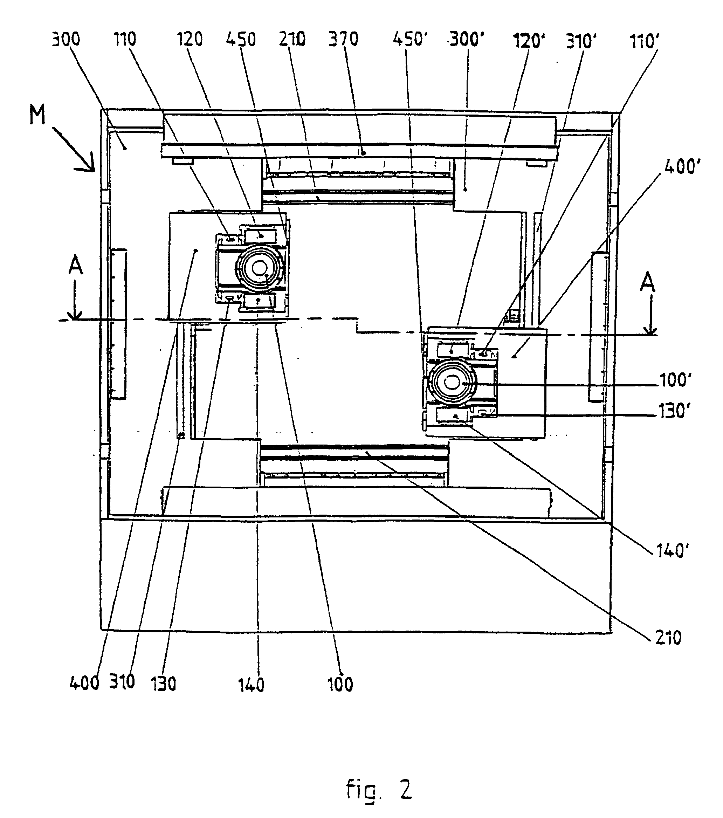

Comme cela apparaît mieux sur le dessin de la figure 2, ledit bâti vertical 200 est aménagé d'une fenêtre entre les deux rails 210 et 220 de la première paire, fenêtre occupée partiellement par la partie arrière des deux poupées 400 et 400'.

Conformément à la caractéristique principale de l'invention, lesdits mouvements selon les axes X, Y et Z, respectivement des demi tables verticales 300 et 300', des poupées 400 et 400' et des coulants 100 et 100' sont mis en oeuvre par des moteurs linéaires.

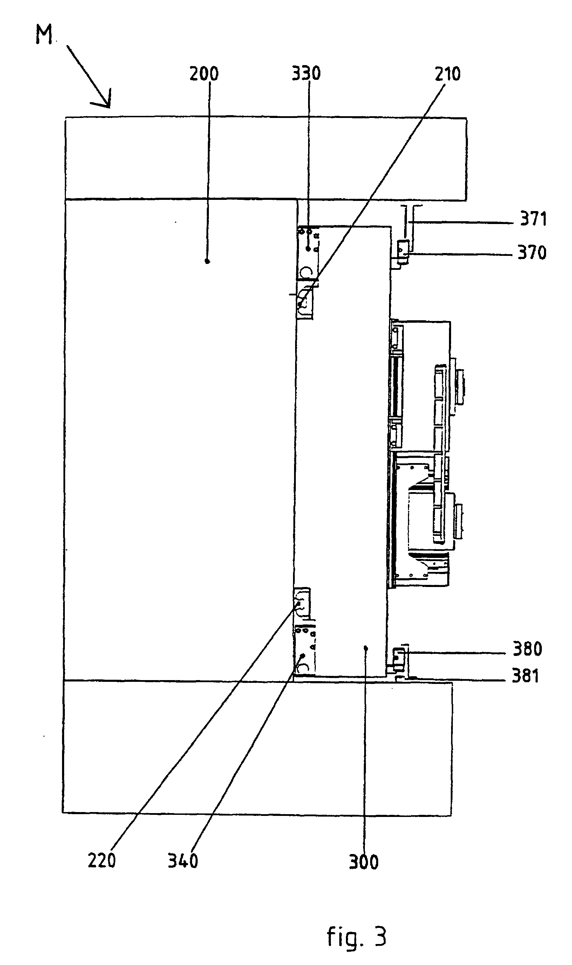

Plus précisément, les deux demi tables verticales 300 et 300' sont identiques et mues chacune par deux moteurs linéaires par l'intermédiaire des blocs primaires 330, 340 (cf figure 3) et 330', 340' auxquels elles sont liées.

Conformément à une des caractéristiques de l'invention, les blocs primaires 330, 340 associés à la demi table 300 et 330', 340' associé à la demi table 300' des moteurs linéaires assurant le mouvement rectiligne indépendant des deux coulants 100 et 100' selon l'axe X, partagent deux à deux, un seul et même bloc secondaire respectivement 350 et 360. Ainsi, selon le mode de réalisation non limitatif illustré, les blocs primaires 330 et 330' sont associés au même bloc secondaire 350 et les blocs primaires 340 et 340' sont associés au même bloc secondaire 360.

Selon le mode de réalisation non limitatif illustré, les blocs secondaires fixes uniques 350 et 360 associés auxdits deux blocs primaires secondaires sont agencés de façon à se trouver sur le même plan que lesdits rails de guidage 210 et 220 selon l'axe X des deux demi tables verticales 300 et 300', c'est à dire sur le plan vertical matérialisé par ledit bâti vertical 200.

Conformément à une autre caractéristique particulièrement avantageuse de l'invention, lesdits moteurs linéaires dont les blocs primaires 330, 330' et 340, 340' partagent deux à deux, un seul et même bloc secondaire, c'est à dire respectivement 350 et 360, partagent deux à deux également une seule et même règle de mesure. Ainsi, les demi tables verticales 300 et 300' ne sont associées au niveau de leur surface avant, qu'à seulement deux règles de mesure fixes 370 et 380 et non quatre conformément aux mises en oeuvre classiques des moteurs linéaires. Aussi, chacune de ces règles de mesure 370 et 380 communique leur mesure sur les demi tables 300 et 300' par l'intermédiaire de deux curseurs de lecture.

Comme illustrée par les figures 1 et 3, une solution de fixation desdites règles de mesure consiste en la fixation de ces dernières sur des poutres 371 et 381 de type de celle profilée en T, lesdits T étant solidaires du bâti fixe 200.

Comme illustrées plus en détail par la figure 4, les deux demi tables verticales 300 et 300' sont aménagées de façon à ce que les paires de rails de guidage 310, 320 et 310', 320' selon l'axe Y des deux poupées 400 et 400' soient agencées sur deux plans parallèles entre eux et perpendiculaires au plan vertical de guidage selon l'axe X défini par la première paire de rails 210 et 220.

Selon une autre caractéristique particulièrement avantageuse l'invention, les deux demi tables verticales 300 et 300' sont symétriques et adoptent chacune la forme d'un C en regard l'un de l'autre et entre les branches desquels se meuvent selon un mouvement de translation vertical selon l'axe Y, les deux poupées 400 et 400' et en conséquence les deux coulants 100 et 100'. La forme en C adoptée par les demi tables verticales a notamment pour avantage de laisser au moins l'ouverture entre ses branches pour autoriser le mouvement selon l'axe Y et selon l'axe Z du coulant.

Selon le mode de réalisation illustré, les poupées 400 et 400' sont chacune associées à deux moteurs linéaires dont les blocs primaires mobiles 410, 420, associés à la poupée 400 et 410', 420', associés à la poupée 400', se déplacent chacun sur un bloc secondaire fixe respectivement 430, 440 et 430', 440' lequel est agencé sur un plan perpendiculaire aux plans sur lesquels sont fixés les rails de guidage selon l'axe X. Ainsi, selon le mode de réalisation illustré, les plans de guidage selon l'axe X et les plans de guidages selon l'axe Y sont perpendiculaires. Ainsi, la structure cinématique adoptée par la machine-outil d'usinage du type bibroche de l'invention ne se cantonne pas à une simple adaptation ou multiplication par deux d'une structure cinématique d'une machine-outil du type monobroche. En effet, les machines-outils d'usinage à grande vitesse classiques adoptant un coulant se mouvant sur trois axes ont pour caractéristique de proposer un plan de guidage selon l'axe Y sensiblement parallèle ou confondu avec le plan de guidage selon l'axe X contrairement à ce que propose la. machine-outil de l'invention, qui doit prendre en compte des critères différents telle la capacité des coulants à se rapprocher ou à adopter une zone commune de course et d'usinage la plus grande possible.

Afin d'être solidaires desdits blocs primaires mobiles et d'être guidées par lesdits rails, les deux poupées porte coulant 400 et 400' comprennent à leurs extrémités des retours venant, comme cela apparaît en figure 4, de part et d'autre de la partie centrale des C formés par les demi tables verticales 300 et 300' formant ainsi des formes susceptibles de s'emboîter. En effet, les paires de rails de guidage 310, 320 et 310', 320' selon l'axe Y des poupées, sont agencées séparément sur deux plans perpendiculaires au plan sur lequel sont agencés les blocs secondaires fixes 430, 440 et 430', 440' des moteurs linéaires assurant l'entraînement en translation selon l'axe Y des poupées. Ainsi, le C couché formé par la forme extérieure de chaque poupée 400 et 400' comporte sur sa partie intérieure centrale, les blocs primaires mobiles 410, 420 et 410', 420' des moteurs linéaires assurant leur entraînement selon l'axe Y et au niveau de la partie intérieure de ses branches, des moyens permettant de coopérer avec le rail vertical disposé de chaque côté de la demi table verticale 300 ou 300'.

Comme illustré sur le dessin de la figure 2, les demi tables verticales 300 et 300' supportent les règles de mesure du mouvement de la poupée selon l'axe Y. Le retour formé par les branches du C de la forme extérieure de chaque poupée permettent en effet, la disposition d'une règle de mesure dans le même plan que celui du rail de guidage selon l'axe Y.

La forme adoptée par la poupée 400 ou 400' et le portique y associé 300 ou 300', à savoir la forme de deux C ou deux U perpendiculaires l'un par rapport à l'autre de façon à ce que les branches de chacun viennent de part et d'autre de la partie centrale de l'autre, a pour avantage de mieux répartir les masses des différents modules mobiles constituant la machine-outil de l'invention. Cette recherche "d'équilibre" permet de diminuer les contraintes sur les différents modules de guidage et d'entraînement et en conséquence d'en augmenter le rendement.

D'autre part, les formes adoptées permettent un. quasi emboîtement entre le portique et la poupée correspondante de sorte que la largeur de la poupée est sensiblement égale ou légèrement supérieure à la longueur des branches du C formé par le portique autorisant ainsi les demi tables verticales à se rapprocher le plus possible dans leur mouvement opposé convergent selon l'axe X. Cette capacité de proposer un rapprochement maximal entre les deux demi tables verticales et en conséquence entre les deux coulants, permet d'augmenter la compacité de la machine-outil M, de diminuer les temps de passage d'un outil porté par un premier coulant à un deuxième outil porté par le deuxième coulant, et ce à partir d'un même point de la pièce à usiner.

Une autre caractéristique participant à l'équilibre de la structure de machine-outil M de l'invention, réside dans le fait que le volume et donc la masse des poupées porte coulant 400 et 400' viennent de part et d'autre des plans verticaux de guidage selon les axes X et Y.

Comme illustrée sur le dessin de la figure 1, la disposition des modules de guidage et d'entraînement selon l'axe Z des coulants 100 et 100' par rapport à leur poupée respective 400 et 400' est la suivante :

Chaque poupée 400 ou 400' est aménagée chacune d'un logement longitudinal selon l'axe Z s'ouvrant l'un en regard de l'autre dans lequel évolue le coulant 100 ou 100'. Ce logement adopte la section d'un C dont les branches comportent chacune sur leur surface intérieure, un rail de guidage et un moteur linéaire à savoir, pour la poupée 400, un rail supérieur 110 associé à un moteur linéaire 120 et un rail inférieur 130 associé à un autre moteur linéaire 140. De même, la poupée 400' est aménagée d'un logement en forme d'un C inversé dont l'ouverture est orientée vers l'ouverture du C formé par le logement longitudinal ménagé dans la poupée 400. La branche supérieure de ce C comprend sur sa partie intérieure un rail supérieur de guidage 110' associé à un premier moteur linéaire 120' et un rail inférieur de guidage 130' associé à un autre moteur linéaire 140'.

Contrairement aux organes d'entraînement selon les axes X et Y, les paires de moteurs linéaires 120, 140 et 120', 140' assumant le mouvement en translation selon l'axe Z respectivement des coulants 100 et 100' sont montés en opposition.

Selon le mode de réalisation illustré, lesdits logements longitudinaux dans lesquels les poupées 400 et 400' accueillent les coulants 100 et 100' qu'elles supportent, sont fermés au moyen d'une plaque de fermeture 450 et 450' permettant de rigidifier la poupée 400 ou 400' au niveau des branches du C formé par le logement aménagé dans cette dernière.

On comprend que la machine-outil d'usinage à grande vitesse de type bibroche, qui vient d'être ci-dessus décrite et représentée, l'a été en vue d'une divulgation plutôt que d'une limitation. Bien entendu, divers aménagements, modifications et améliorations pourront être apportés à l'exemple ci-dessus, sans pour autant sortir du cadre de l'invention comme définie dans les revendications.

Ainsi, par exemple, le nombre de moteurs linéaires et de rails assumant l'entraînement en translation et le guidage en translation selon un des trois axes ne doit pas être limitatif.

## Revendications

1. Machine-outil (M) d'usinage à grande vitesse du type de celle
- assurant la mise en mouvement indépendante sur au moins trois axes de deux coulants (100 et 100') porte-outil,
- comportant une pluralité de moyens de guidage correspondant aux mouvements rectilignes des deux coulants (100 et 100') selon trois axes (X, Y et Z),
- où les moyens de guidage sont constitués par des paires de rails de guidage,
**CARACTÉRISÉE PAR LE FAIT QUE**
lesdits mouvements indépendants de chaque coulant étant mis en oeuvre par des moteurs linéaires, du type de ceux comportant chacun un bloc primaire mobile et un bloc secondaire fixe,
les blocs primaires mobiles indépendants (330, 340 et 330', 340') desdits moteurs linéaires assurant le mouvement rectiligne indépendant de chacun des deux coulants (100, 100') selon au moins un des trois axes, partageant deux-à-deux un seul et même bloc secondaire fixe (350 et 360),
l'axe de mouvement sur lequel est partagé un bloc secondaire pour deux blocs primaires étant constitué par un axe de mouvement transversal horizontal (X),
elle comprend une première paire de rails (210 et 220) agencée sur un plan vertical matérialisé par un bâti fixe vertical (200) sur lequel sont guidées en translation selon un premier axe transversal horizontal (X), deux demi tables verticales (300 et 300') sur chacun desquelles est agencée une deuxième paire de rails (310, 320 et 310', 320') sur laquelle est guidée en translation selon un deuxième axe transversal (Y), une poupée (400 et 400') dans laquelle est agencée une troisième paire de rails (110, 130 et 110', 130') sur laquelle est guidé en translation selon un troisième axe longitudinal (Z) perpendiculaire aux deux premiers, un coulant (100 et 100') à l'extrémité duquel est entraîné en rotation un outil, le bâti fixe vertical (200) étant aménagé d'une fenêtre entre les deux rails (210 et 220) de la première paire, fenêtre occupée partiellement par la partie, arrière des deux poupées (400 et 400').

2. Machine-outil (M) selon la revendication 1, **CARACTÉRISÉE PAR LE FAIT QUE** les deux demi tables verticales (300 et 300') sont aménagées de façon à ce que les paires de rails de guidage selon le deuxième axe transversal (Y) des deux poupées (400 et 400') soient agencées sur deux plans parallèles entre eux et perpendiculaires au plan vertical de guidage selon le premier axe transversal (X) défini par ladite première paire de rails (210 et 220).

3. Machine-outil (M) selon la revendication 2, **CARACTÉRISÉE PAR LE FAIT QUE** les deux demi tables verticales (300 et 300') sont symétriques et adoptent la forme d'un C en regard l'un de l'autre et entre les branches desquels se meuvent dans un mouvement selon le deuxième axe transversal (Y) les deux poupées (400 et 400') porte coulant.

4. Machine-outil (M) selon la revendication 3, **CARACTÉRISÉE PAR LE FAIT QUE** les deux poupées (400 et 400') porte coulant comprennent à leurs extrémités des retours venant de part et d'autre de la partie centrale des C formés par les demi tables verticales (300 et 300').

5. Machine-outil (M) selon la revendication 1, **CARACTÉRISÉE PAR LE FAIT QUE** lesdits moteurs linéaires dont les blocs primaires (330, 340 et 330', 340') partagent deux à deux, un seul et même bloc secondaire (350 et 360), partagent deux à deux une seule et même règle de mesure (370 et 380) dans laquelle chaque règle de mesure (370 et 380) partagée communique ses mesures par l'intermédiaire de deux curseurs chacun solidaire d'une des demi tables verticales (300 ou 300').

## Patentansprüche

1. Werkzeugmaschine (M) für Hochgeschwindigkeitsbearbeitung, welche die voneinander unabhängige Bewegung zweier Hülsen (100 und 100') für einen Werkzeugträger entlang mindestens dreier Achsen gewährleistet,
eine Vielzahl von Führungsanordnungen entsprechend den geradlinigen Bewegungen der beiden Hülsen (100 und 100') entlang dreier Achsen (X, Y und Z) aufweist,
wobei die Führungsanordnungen aus Schienenpaaren für die Führung bestehen,
**dadurch gekennzeichnet, dass**
die voneinander unabhängigen Bewegungen einer jeden Hülse von Linearmotoren bewirkt werden, von denen jeder einen beweglichen Primärblock und einen feststehenden Sekundärblock aufweist,
die voneinander unabhängigen beweglichen Primärblöcke (330, 340 und 330', 340') der Linearmotoren die geradlinige voneinander unabhängige Bewegung einer jeden der beiden Hülsen (100, 100') entlang wenigstens einer der drei Achsen gewährleisten, wobei sie sich jeweils paarweise ein und denselben feststehenden Sekundärblock (350 und 360) teilen,
die Achse der Bewegung, auf der ein Sekundärblock für die Teilung durch zwei Primärblöcke zur Verfügung steht, aus der waagrechten Achse (X) für die Verschiebebewegung besteht,
sie ein erstes Paar Schienen (210 und 220) aufweist, die in einer senkrechten Ebene angeordnet sind, die aus einem senkrechten feststehenden Gestellteil (200) besteht, auf dem entlang einer ersten waagrechten Achse (X) der Verschiebung zwei senkrechte Halbtische (300 und 300') geführt werden, wobei auf jedem von ihnen ein zweites Paar Schienen (310, 320 und 320', 320') angeordnet ist, auf dem entlang einer zweiten Achse (Y) der Verschiebung ein Spindelkasten (400 und 400') geführt wird, in dem ein drittes Paar Schienen (110, 130 und 110', 130') angeordnet ist, auf dem entlang einer dritten Achse (Z) der Verschiebung, die senkrecht zu den beiden anderen Achsen ist, eine Hülse (100 und 100') geführt wird, an deren Ende ein Werkzeug drehbar angeordnet ist, wobei das senkrechte feststehende Gestellteil (200) mit einem zwischen den beiden Schienen (210 und 220) des ersten Paars angeordneten Fenster versehen ist, das teilweise vom rückwärtigen Abschnitt der zwei Spindelkästen (400 und 400') eingenommen wird.

2. Werkzeugmaschine (M) nach Anspruch 1, **dadurch gekennzeichnet, dass** die zwei senkrechten Halbtische (300 und 300') derart angeordnet sind, dass die Schienenpaare für die Führung entlang der zweiten Achse (Y) der Verschiebung für die beiden Spindelkästen (400 und 400') in zwei zueinander parallelen Ebenen verlaufen, die senkrecht zur senkrechten Ebene für die Führung entlang der ersten Achse (X) der Verschiebung ist, welche durch das erste Schienenpaar (210 und 220) aufgespannt wird.

3. Werkzeugmaschine (M) nach Anspruch 2, **dadurch gekennzeichnet, dass** die beiden senkrechten Halbtische (300 und 300') symmetrisch sind, jeweils die Form eines C aufweisen und sich gegenüberliegend angeordnet sind, wobei zwischen ihren Armen die beiden Spindelkästen (400 und 400') für das Werkzeug in Richtung der zweiten Achse (Y) der Verschiebung beweglich angeordnet sind.

4. Werkzeugmaschine (M) nach Anspruch 3, **dadurch gekennzeichnet, dass** die beiden Spindelkästen (400 und 400') für die Aufnahme der Hülsen an ihren Enden mit Umlenkungen versehen sind, die sich zu beiden Seiten des mittigen Abschnitts des durch die senkrechten Halbtische (300 und 300') gebildeten C erstrecken.

5. Werkzeugmaschine (M) nach Anspruch 1, **dadurch gekennzeichnet, dass** die Linearmotoren, deren Primärblöcke (330, 340 und 330', 340') sich paarweise ein und denselben Sekundärblock (350 und 360) teilen, sich paarweise ein und dieselbe Messanordnung (370 und 380) teilen, wobei die Messanordnungen (370 und 380) ihre Messwerte mittels zweier Schieber übertragen, die fest mit den senkrechten Halbtischen (300 oder 300') verbunden sind.

## Claims

1. High speed machining machine tool (M) of the type of which
- allowing the independent setting into motion along at least three axis of two tool carrying slides (100 and 100'),
- including a plurality of guiding means corresponding to rectilinear motions of the two slides (100 and 100') along three axis (X, Y and Z),
- where the guiding means are constituted of pairs of guiding rails,
**CHARACTERIZED IN THAT**
said independent motions of each slide are implemented by linear motors, of the type that containing a mobile primary block and a fixed secondary block, the independent mobile primary blocks (330, 340 and 330', 340') of said linear motors ensuring the independent rectilinear motion of each of the two slides (100, 100') along at least of the three axis, sharing two by two a single and same fixed secondary block (350 and 360), the axis of motion on which is shared a secondary block for two primary blocks, being constituted of an axis of horizontal and transverse axis (X),
it is comprised of a first pair of rails (210 and 220) arranged on a vertical plane materialized by a vertical fixed frame (200) on which are guided in translational motion along a first horizontal transverse axis (X) two vertical half tables (300 and 300'), and on each of said tables is placed a second pair of rails (310, 320 and 310', 320') on which is guided in translational motion along a second transverse axis (Y) a spindle head (400 and 400') in which is arranged a third pair of rails (110, 130 and 110', 130') on which is guided in translational motion along a third longitudinal axis (Z) perpendicular to the two first axis, a slide (100 and 100') on the extremity of which a tool is rotating, the vertical fixed frame (200) being provided with an opening between the two rails (210 and 220) of the first pair, opening being partially occupied by the back part of the two spindle heads (400 and 400').

2. Machine tool (M) according to claim 1, **CHARACTERIZED IN THAT** the two vertical half tables (300 and 300') are arranged in such a way that the pair of guiding rails along the second transverse axis (Y) of the two spindle heads (400 and 400') are arranged on two planes parallel to each other and perpendicular to the vertical guiding plane along the first transverse axis (X) defined by said first pair of rails (210 and 220).

3. Machine tool (M) according to claim 2, **CHARACTERIZED IN THAT** the two vertical half tables (300 and 300') are symmetrical and have a C shape facing each other, and in between their branches the two slide carrying spindle heads (400 and 400') are moving along the second transverse axis (Y).

4. Machine tool (M) according to claim 3, **CHARACTERIZED IN THAT** the two slide carrying spindle heads (400 and 400') are provided at their extremities with return traverses placed on each side of the central part of the Cs formed by the vertical half tables (300 and 300').

5. Machine tool (M) according to claim 1, **CHARACTERIZED IN THAT** said linear motors whose the primary blocks (330, 340 and 330', 340') share two by two a single and same secondary block (350 and 360), share two by two a single and same measuring rule (370 and 380), in which each shared measuring rule (370 and 380) sends its measurements by means of two cursors, each one of them being linked to one of the vertical half tables (300 or 300').
